# EUROPÄISCHE PATENTANMELDUNG

(11) **EP 0 984 364 A2**
(43) Veröffentlichungstag der Anmeldung: **08.03.2000**
(21) Anmeldenummer: 99116789.1
(22) Anmeldetag: 31.08.1999
(51) Int. Cl.: G06F 15/80

(54) **Neuronales Netz zum computergestützten Wissensmanagement**

(30) Priorität: 31.08.1998 DE 29821970 U; 02.10.1998 DE 29817635 U
(71) Anmelder: Steiner, Ralf, Dr., 81549 München (DE)
(72) Erfinder: Steiner, Ralf, Dr., 81549 München (DE)

(57) **Zusammenfassung**

Die Erfindung bezeichnet ein Verfahren für und ein neuronales Netz zum computergestützten Wissensmanagement, basierend auf einem durch einen Computer im Speicherbereich ausgebildeten neuronalen Netz 1, insbesondere zur Verwendung in einem über das Internet bedienbaren dezentralen computergestützten Patentwesens im weiteren Sinne. Das neuronale Netz 1 bildet ein System künstlicher Intelligenz (KI) aus, indem es sich über eine zugrundeliegende Wissensbasis in Form von rechentechnisch lesbaren Textinhalten erstreckt. Um Wissensmengen rechentechnisch zu verwalten und gegeneinander zu analysieren besteht das neuronales Netz 1 aus aufeinander bezogenen und gewichteten Elementen 2, welche durch ihre speziellen Eigenschaften als über Wechselwirkungspaare definierte Durchschnittsmengen einen Hilbertraum 3 ausbilden und denen vorzugsweise jeweils ein Koordinatenvektor 4 zugeordnet ist, welcher beim Wurzelelement vorteilhaft [0] gewählt wird. Durch entsprechende Konvergenzeigenschaften der assoziativen Datenstruktur bei einer Vielzahl von statistisch unabhängigen Eingaben sinkt in dem über das neuronale Netz 1 ausgebildeten Expertensystem die Redundanz und das Wissen wird klassifiziert.

## Beschreibung

Die Erfindung bezeichnet ein Verfahren für und ein neuronales Netz zum computergestützten Wissensmanagement, basierend auf einem durch einen Computer ausgebildeten neuronalen Netz, insbesondere zur Verwendung in einem über das Internet bedienbaren dezentralen computergestützten Patentwesens im weiteren Sinne. Das neuronale Netz bildet ein System künstlicher Intelligenz (KI) aus, indem es sich über eine zugrundeliegende Wissensbasis in Form von rechentechnisch lesbaren Daten erstreckt. Das neuronale Netz selbst ist vorteilhaft als eine spezielle Art eines vertikal strukturierten neuronalen Netzwerkes ähnlich der Harmonie-Theorie ausgebildet, bei welcher jedem Knoten bzw. Neuron als Element des Netzwerkes eine Bedeutung zugeordnet ist. Jedes Element wird von mehreren gewichteten Verbindungen (Bezügen) zu verschiedenen hierarchisch höheren Elementen bestimmt.

Wissensmanagement beinhaltet im heutigen Sprachgebrauch die effiziente Verwaltung von Wissen aller Art im Dokumentenmanagement, anfangs von Planungsdaten, Wirtschaftsdaten, Kommunikationsdokumenten und Publikationen in der Form von Textdaten, später über objektorientierte Technologien auch in multimedialer Form. Dazu wird das Wissen über geeignete Gemeinsamkeiten klassifiziert mit dem Ziel verwaltet, eine hohe Redundanz von Anfang an zu vermindern. Automatische Systeme zur Klassifizierung benötigen zumeist textbasierte Dokumente, um mit Hilfe von computergestützten Textsuchmaschinen, allgemein üblichen Textstrukturierungen zur Indizierung, hierarchisch klassifizierten Thesauren und linguistischen Gesetzmäßigkeiten auf deren Inhalt schließen zu können. Letztere bilden die Grundlage heute üblicher selbstklassifizierender Internetsuchmaschine. Die aufgefundenen Assoziationen zwischen den verschiedenen Dokumenten können als Eingabe- und Trainingsdaten für ein neuronales Netz verwendet werden.

Neuronale Netze als solche und speziell zur Klassifizierung von Wissen sind aus der IPC G06F15/18 vorbekannt. Die Druckschrift DE3411168C2 offenbart eine hierarchische assoziative Datenstruktur, vorzugsweise zur Speicherung von Text, die Druckschrift DE4108310C2 ein Verarbeitungssystem für eine Wissensbasis in einem Expertensystem, bei welchem das von einem Benutzer eingegebene Wissen über den Grad des ursprünglichen Zusammenhangs gespeichert ist und das sich daraus ergebende Expertensystem computergestützt über ein Wissensbasis-Verarbeitungssystem von einem Wissensingenieur modifiziert und somit gepflegt wird. In der Druckschrift DE4124501C2 wird eine assoziative Datenstruktur in Form eines neuronalen Netzes und ein zugeordnetes Verfahren offenbart, welches unter Benutzung einer Metrik zwischen Eingabedaten zu einer eindeutigen Klassifizierung führt. Die Druckschrift DE4400261C1 offenbart, speziell für das Verständnis von geschriebenen Texten, eine assoziative Datenstruktur, welche als künstliches neuronales Netz aufgebaut ist und eine Vielzahl von Netzknoten in aufeinanderfolgenden Schichten enthält, welche speziell ungewichtete Knoteneingänge enthält und deren Knoten in zwei Arten unterteilt sind, wodurch eine wesentliche Redundanzminderung erzielt wird.

Die nachveröffentlichte DE19737939A1 zeigt eine selbstkonvergente assoziative Datenstruktur in Form eines neuronalen Netzes zur computergestützten Verwaltungen von Entwicklungen, welche mit den speziellen Beschreibungen der die Wissensmenge bestimmenden Merkmale als Abbildungen von Mitteln in Wirkungen und umgekehrt einen Hilbertraum ausbilden. Diese assoziative Datenstruktur eignet sich für die Verwaltung aller real existierenden Entwicklungen (im Weiteren kurz Entwicklungen), insbesondere auch für technische Entwicklungen, welche Gegenstand des Patentwesen im weiteren Sinne sind. Unter letzterem (im Weiteren kurz Patentwesen) ist das gesamte Wissensmanagement technischer Entwicklungen. angefangen vom Erfinder oder dem mit einem Problem beauftragten Entscheidungsträger, über die damit betrauten Dienstleister bis hin zu hoheitlichen Institutionen zu verstehen, welche in ihrer Tätigkeit im sachlichen Bereich rechentechnisch unterstützt werden sollen.

Die die reale Welt beschreibende erkannte Wissensmenge (im Weiteren kurz Wissensmenge) ist in diesem Sinne über Entwicklungen bestimmt, die mengenmäßig hierarchisch auseinander hervorgehen. Das Wissensmanagement in dieser Erfindung bezieht sich auf derartige Wissensmengen. Die DE19737939A1 dient dem Fachmann vorteilhaft zum grundlegenden Verständnis des Aufbaus, des Funktionsprinzips und der Verwendung dieser Erfindung.

Es ist Aufgabe dieser Erfindung, ausgehend und in Weiterbildung des vorbekannten Standes der Technik, Wissensmengen rechentechnisch zu verwalten und gegeneinander zu analysieren. Diese Aufgabe wird durch die unabhängigen Patentansprüche im wesentlichen gelöst. Vorteilhafte Ausgestaltungen der computergestützten neuronalen Netzstuktur zur rechentechnischen Realisierung, spezielle Analysewerkzeuge und -verfahren sowie das Dialogsystem zur Eingabe und zur Ausgabe der Wissensmengen werden in den Weiterbildungen aufgezeigt.

Das Wesen der Erfindung baut auf den hierarchisch auseinander hervorgehenden bezogenen Entwicklungen zugeordneten Wissensmengen auf, welche durch eine geeignete Definition von Durchschnittsmengen in Form eines Wechselwirkungspaares vorteilhaft als 〈 Quantität | Qualität 〉 ausgebildet werden, wobei die bezogenen Entwicklungen die Elemente eines neuronalen Netzes darstellen, welches in Verbindung mit rechentechnisch erklärten Neueinträgen (Addition) und Bewertungen (Multiplikation) dieser Elemente einen Hilbertraum ausbildet. Im Übertragenen ist die Beschreibung realer Entwicklungen bzw. diese beschreibenden Wissensmengen an die Beschreibung quantenmechanischer Zustände angelehnt. Die damit als Punktmenge behandelbare Wissensmenge bildet einen Vektorraum aus und weist insbesondere günstige Konvergenzeigenschaften zur rechentechnischen Anwendung des RITZ'schen Verfahrens auf. Die in den Anwendungen bezüglich eines von neuronalen Netz ermittelten Maßes über den Elementen statistisch gegebene Konvergenz zum Extremum führt zur einer assoziativen Datenstruktur minimaler Redundanz.

Das neuronale Netz wird rechentechnisch über eine spezielle dynamisch verwaltete assoziative Datenstruktur im Speicher eines Computers realisiert, wozu eine sehr systemnahe Programmierung des diese assoziative Datenstruktur generierenden und verwaltenden Verfahrens notwendig ist, insbesondere muß der Zugriff auf einen linearen Speicherbereich ausreichender Größe, die Verwendung und Arithmetik von computerspezifischen Zeigern (im Weiteren kurz Zeiger) auf Teile dieses Speicherbereiches und ein für Rekursionen über die assoziative Datenstruktur ausreichend großer Stack gegeben sein. Dadurch ist es möglich, die Eingabe der notwendigen Elemente, Bezüge, Bewertungen usw. speicher- und rechenzeitoptimiert zur inkrementellen Erweiterung einer assoziativen Datenstruktur zu benutzen, deren Speicherplatzbedarf nur annähernd linear mit der Anzahl der Einträge ansteigt und vorzugsweise weniger als 1KB pro Eintrag beträgt. Dadurch ist es möglich, das Wissen eines sehr großen Wissensgebietes, bspw. der Technik, insgesamt in den mit 32 Bit oder bei sehr großen Wissensgebieten mit 64 Bit adressierbaren und mit ausgebauten handelsüblichen Servern realisierbaren Speicherbereichen zu erfassen und zu verwalten. Die assoziative Datenstruktur kann über Netze dezentral vernetzt sein. Vorteilhaft beinhaltet jede Entwicklung der assoziativen Datenstruktur zusätzlich einen Verweis auf eine tabellarische Inhaltsdatenbank bspw. für einen Link zu einem Quellendokument, aus welchem das Wissen generiert wurde.

Die Ein- und Ausgabe des neuronalen Netzes zum Nutzer erfolgt über ein intuitives Dialogsystem, mit welchem das in einem Server beinhaltete neuronale Netz über Kommunikationsverbindungen für Daten, insbesondere vorteilhaft einschließlich des Internets, verbunden ist. Vorteilhaft wird das neuronale Netz selbst ausschließlich über die Eingabe eines standardisierten streng chronologischen Streams generiert, indem für jedes Element, welches vorteilhaft mit einem zugeordneten eindeutigen Zeitindex identifiziert wird, das zur Definition dienende Wechselwirkungspaar 〈 Quantität | Qualität 〉 geeignet direkt oder indirekt über Zeiger gespeichert, die angegebenen Bezüge zu anderen Elementen gespeichert und generiert sowie vorteilhaft über Zeiger zeitlich rückwärts, optional auch zusätzlich zeitlich vorwärts, verwiesen werden. Jedes neu eingegebene Element ist mit einem anfangs normierten Gewicht bewertet. Günstig ist es, zur Definition eines Elements den Zeitindex zu verwenden sowie das Wechselwirkungspaar und die angegebenen Bezüge nutzerspezifisch gegen Manipulation zu signieren. Vorteilhaft können alle notwendigen Informationen zur Ausgabe wieder in den standardisierten streng chronologischen Stream überführt werden. Dadurch ist die Übertragung auf bzw. die Synchronisation von mehreren neuronalen Netzen über Kommunikationsverbindungen und über eine Verschlüsselung des Streams die Datensicherheit gewährleistet. Insbesondere können halbseitig gespiegelte neuronale Netze diesen Stream zusätzlich zu ihren internen Streams einlesen.

Die Entwicklungssysteme gehen über orientierte Bezüge hierarchisch von einem Wurzelsystem aus, durch Mengenoperationen (OR, AND, NOT) auseinander hervor, wobei das die Entwicklung kennzeichnende Entwicklungssystem über die Durchschnittsmenge aller Durchschnittsmengen 〈Quantität | Qualität 〉 der Bezugssysteme festgelegt ist und die Gattung über eine diese beinhaltende Mengenrelation bestimmt ist, bspw. über die Durchschnittsmenge aller Vereinigungsmengen von Quantität und Qualität oder die Durchschnittsmenge jeweils eines dieser Mengen aller Bezugssysteme. Das Wechselwirkungspaar 〈 Quantität | Qualität 〉 definiert über die verbale Definition die Entwicklung und damit genau die Wissensmenge, welche die Quantität auf die Qualität und umgekehrt die Qualität auf die Quantität abbildet, also innerhalb der Kreuzmenge aller Quantitäten und aller Qualitäten eine Durchschnittsmenge ausbildet. Im idealen Grenzfall ist diese Abbildung mathematisch eineindeutig. Diese dem ideal definierten Merkmal zugeordnete Wissensmenge ist notwendig maximal, da im anderen Fall nicht alle zur Gattung gehörenden Quantitäten oder Qualitäten obige Bedingung erfüllen.

Das neuronale Netz ist mit den Elementen zur Definition von Wissensmengen eine assoziative Datenstruktur, welche durch die Eingabe und Modifikation von Bezügen zwischen Entwicklungen ausgebildet und inkrementell erweitert wird, wobei die bereits eingetragenen Entwicklungen rückwärtig zur Definition weiterer Entwicklungen dienen. Die Bildung einer weiteren Entwicklung innerhalb der assoziativen Datenstruktur entspricht der Addition von eingetragenen Elementen unter Neueintrag eines weiteren Elements, welches bezüglich der Merkmale über die Durchschnittsmengenbildung und bezüglich des Gewichts über die gewöhnliche Addition über alle jeweils durch die Bezüge bewerteten Gewichte der Bezugselemente definiert ist. Entsprechend ist dieses Gewicht rekursiv über alle Bezüge berechenbar. Das Negativelement ergibt sich jeweils bezüglich eines Elements aus den zugeordneten Ausschlußmerkmalen als NOT-Element mit negativen Gewicht. Das Nullelement ist die 〈 Alles | Nichts 〉 enthaltene Wurzelentwicklung mit dem Gewicht 0. Die Änderung des Status einer Entwicklung ergibt sich indirekt durch eine Bewertung seiner Bezüge und entspricht der Multiplikation mit einer Zahl, welche bezüglich der Bewertung eines Bezugs als die gewöhnliche und bezüglich der Merkmale der Bezugsentwicklung als die Anzahl der Durchschnittsmengenbildung mit sich selbst definiert ist, wobei vorteilhaft von der Deutung einer Realisierungswahrscheinlichkeit zur Verwendung dieses Bezugs für eine konkrete Entwicklung ausgegangen wird und die Realisierungswahrscheinlichkeit 0 als gleichwahrscheinlich zu interpretieren ist. Eine Multiplikation mit Eins entspricht somit der Multiplikation mit der Identität und einer mit Null der mit dem Nullelement. Vorteilhaft zur Deutung als Realisierungswahrscheinlichkeit ist eine Abbildung der reellen Zahlen der Bewertung in das Intervall (-1, 1), mit den Bedeutungen: 1= sicher verwendet; -1 sicher nicht verwendet. Der gebrochenzahlige Anteil entspricht einer flächenhaften Realisierungswahrscheinlichkeit für eine konkrete Entwicklung.

Die Entwicklungen und die Bezüge bzw. die Bezugsentwicklungen sind über eine Durchschnittsmengenrelation in Form eines Wechselwirkungspaares in der Form 〈Quantität | Qualität 〉 bezüglich des Bedeutungsinhalts definiert, wobei diese verbal mit Begriffen vorgenommen ist, die optional über Operatoren AND, OR, NOT verknüpft sind. Die Durchschnittsmengenrelation jedes Elements bestimmt für eine Entwicklung ein Entwicklungssystem 〈 Lösung | Aufgabe 〉, bestehend aus einem konkretisierten oder der Kombination mehrerer Bezugssysteme 〈 Mittel | Wirkung 〉 als Merkmale. Die Elemente beinhalten oder sind mit tabellarischen Datenbanken verknüpft, welche die verbale Definition, den Index der Bezugselemente, den Zeitindex, den Nutzerindex sowie optional den Kurztitel, die Kurzbeschreibung und weitere den Elementen zugeordnete unveränderbare Angaben beinhalten.

Für die Ein- und Ausgabe der Wissensmengen wird über das Dialogsystem mit dem Nutzer im wesentlichen mit den verbalen Wechselwirkungspaaren und der sich aus den bezogenen Entwicklungen ergebenden assoziative Datenstruktur operiert, zur Analyse und Verwaltung im neuronalen Netz selbst im wesentlichen mit den zugeordneten Koordinaten, welche sich durch die Bezüge der Entwicklungen sowie aus deren Bewertung durch die Abbildung der dynamischen assoziativen Datenstruktur des neuronalen Netzes im Hilbertraum ergeben. Demnach werden bei der Analyse und Verwaltung auch Wissensmengen berücksichtigt, die keine direkten Bezüge zueinander haben, wenn ihre Koordinaten den Analyse- bzw. Verwaltungsbedingungen genügen. Dadurch ist es computergestützt möglich, alle von dem neuronalen Netz erfaßten Wissensmengen gleichermaßen und eindeutig zu verwalten und zu analysieren. Jede einer bezogenen Entwicklung zugeordnete Wissensmenge ist über sein Element des neuronalen Netzes durch genau einen Koordinatenvektor charakterisiert, welcher vorteilhaft diesen direkt oder verknüpft zugeordnet und somit Teil des Elements ist. Die Wissensmengen können rechentechnisch vom neuronalen Netz neben den Bezügen zueinander auch über ihre Koordinaten verwaltet werden, welche insbesondere die Grundlage für gegenseitige Analysen darstellen. Als Analysemethoden werden in der Vektorrechnung übliche Methoden (Prüfung ob innerhalb einer Kugel, innerhalb eines Raumwinkelbereiches, Projektion auf bestimmte Vektoren) angewandt, die insbesondere auf der Berechnung eines Skalarprodukts basieren. Die Berechnung von Vektoren bzw. Wissensmengen mit bestimmten Eigenschaften ist möglich bspw. über die Orthogonalität mit Hilfe des SCHMIDT'schen Verfahrens. Vor der Berechnung können optional Filter bestimmte Elemente ausblenden oder umgewichten. Dadurch sind insbesondere ähnliche Entwicklungen (Raumwinkel), naheliegende Entwicklungen (Kugel), Entwicklungsschwerpunkte (Häufungen), Entwicklungsfreiräume (Leerstellen), Entwicklungsumgehungen (Orthogonalisierungen), Trends (mittlerer Raumwinkel der Folgeentwicklungen der Kugel um Häufungen) usw. über die Gesamtheit der Wissensbasis oder über speziell gefilterte Teilmengen möglich. bspw. zur Konkurrenzanalyse.

Jeder mit dem neuronalen Netz kommunizierende Nutzer ordnet bei der Angabe oder bei der Bewertung von 〈 Quantität | Qualität 〉 auf Basis seines persönlichen Wissens eine konkrete Entwicklung dieser Wissensmenge zu oder nicht, wobei er zumindest unbewußt bestrebt ist, ein bestimmtes sich aus dem Anwendungsfall ergebendes Maß zu extremieren. Diese Zuordnungen bilden die trainierenden Eingabedaten des neuronalen Netzes. Sie weisen naturgemäß jeweils nur einen geringen Informationsgehalt und untereinander eine hohe Redundanz auf. Das neuronale Netz bildet sich bei jeder Eingabe und Bewertung bezüglich seiner assoziativen Datenstruktur dynamisch um. Dadurch wird von dem neuronalen Netz über sehr viele Eingaben verschiedener Nutzer die beschriebene Wissensmenge statistisch unabhängig aufakkumuliert und 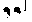 rauschgemindert", indem eine wiederholt gleichartig zugeordnete Entwicklung diese notwendig konkretisiert. Über gerichtete Bezüge auf bereits eingetragene Bezugsentwicklungen werden die diese definierenden Wissensmengen miteinander verknüpft und begrenzen somit die beschriebenen Wissensmengen der Entwicklung. Eine Konkretisierung der Wissensmenge der Bezugsentwicklungen führt dadurch auch zu einer Konkretisierung der anfänglich nur durch die Bezugsgattung begrenzten Wissensmenge der Entwicklung selbst.

Da ein idealeres Wechselwirkungspaar notwendig eine höhere flächenhafte Wahrscheinlichkeit aufweist, daß eine konkrete Entwicklung innerhalb der Durchschnittsmenge statt nur innerhalb einer der diese bildenden Mengen beinhaltet ist, wird dieses nach einer Akkumulation höher bewertet sein. Je konkreter eine Entwicklung definiert, bzw. eine Frage gestellt wurde, um so höher wird statistisch deren Bewertung und die Qualität, bzw. der Aussagegehalt der Antwort sein. Hohe Bewertungen korrelieren statistisch mit hohen absoluten Maßen. Neu eingetragene Entwicklungen befinden sich notwendig am Ende der assoziativen Datenstruktur bzw. auf dem Rand des Hilbertraumes. Durch die für Neueinträge oder Anfragen vorteilhafte und deshalb statistisch vom Nutzer angestrebte hohe Bewertung, welches einer funktionalen Zielfunktion über dem Rand des Hilbertraumes als Maß entspricht, ist statistisch eine Konvergenz zu diesem Extremum gegeben. Entsprechend des RITZ'schen Verfahrens konvergiert die zugrundeliegende assoziative Datenstruktur als solche zu der notwendig existierenden idealen Klassifikation des Wissens. Deshalb eignet sich dieses neuronale Netz nebenbei als Basis eines sich stets dynamisch dem Wissenstand anpassenden automatischen Klassifizierungssystem, indem dieses aus den Hauptbezügen der Netzstruktur generiert wird.

Die Angabe des Bezugs schränkt jedes definierte Wechselwirkungspaar auf die Menge eines jeweiligen Bezugsystems ein, welches optional auch die Gattung der Entwicklung festlegt. Dabei ist ein idealer Bezug gleichwertig mit einem idealen Bezugssystem, welches mit allen Wechselwirkungspaaren eineindeutig bestimmt ist, also der Qualität eindeutig die Quantität und umgekehrt zugeordnet ist. Bei den in der Praxis auftretenden realen Bezügen ist dies üblicherweise nicht gegeben, jedoch ist die Wahrscheinlichkeit, daß bezüglich aller Bezüge mit einem gegebenen beinhalteten Begriff eine konkrete Realisierung von der Wissensmenge des Bezugssystems Gebrauch macht, bei idealen Bezügen maximal. In diesem Sinne konvergiert über die Vielzahl der Eingaben und Bewertungen die assoziative Datenstruktur zum wahren Sachverhalt, welcher durch ideale Bezüge bzw. idealen Systeme ausgebildet ist und keine Redundanz aufweist, ohne diesen jemals zu erreichen. Die Bezüge sind vorteilhaft normiert gewichtet und mit einem, optional durch Wahrscheinlichkeitsangaben Fuzzy basierenden, Status versehen, welcher optional selbst aus mehreren nach Wahrscheinlichkeiten gewichteten normierten Bezügen besteht. Dadurch können verschiedenartige Bewertungsgruppen gefiltert und umgewichtet werden.

Vorteilhaft wird die Entwicklung bzw. das Element mit einem Kurztitel versehen. Es ist auch zur Verbesserung der Lesbarkeit für den Nutzer günstig, eine Kurzbeschreibung der konkret angedachten und in der Wissensmenge beinhalteten Entwicklung beizufügen. Ebenso ist es günstig, neue definierende Quantitäten bzw. Qualitäten auf der Basis der durch angegebene Bezüge vorbekannten Quantitäten bzw. Qualitäten begrifflich festzulegen, wobei logische Operatoren AND, OR, NOT verwendet werden können. Dadurch wird nebenbei vom neuronalen Netz automatisch je ein Thesaurus für Quantitäten bzw. Qualitäten generiert, welcher diese Begriffe hierarchisch strukturiert und entsprechend des Gewichts der sie verwendenden Elemente bewertet beinhaltet. Des weiteren kann in diesen Beschreibungen und Definitionen, welche die Wissensbasis des neuronalen Netzes darstellen, in üblicher Weise textorientiert und über linguistisch sinnvolle Verknüpfungen im Kontext nach Begriffen recherchiert werden. Dazu wird vorteilhaft je eine rechts- und linkgeordnete indizierte Liste mit Verweis auf den Zeitindex des Elements oder ein Zeiger auf diesen generiert, welcher den Begriff beinhaltet. Mehrsprachlichkeit kann dabei berücksichtigt werden. Ebenso ist es denkbar, basierend auf einer Analyse der Syntax und Semantik in den Definitionen jedes Wechselwirkungspaars, verbunden mit den beiden Thesauren für die Begriffe der Quantität bzw. der Qualität, diese verbalen Definitionen mit einer signifikant hohen Wahrscheinlichkeit in mathematisch logische Terme von Begriffen zu transformieren, welche schließlich rekursiv über die Bezugselemente rechentechnisch aufgelöst werden, um vereinfachte Definitionen zu erhalten oder Widersprüche zu selektieren. Vorteilhaft werden alle Elemente dynamisch gespeichert und über eine über Zeiger verkettete Liste dynamisch verwaltet. Jedes Element besitzt ein eindeutig zugeordnetes NOT-Element, welches vorteilhaft durch einen Zeiger auf dasselbe Wechselwirkungspaar verwaltet wird. Das NOT-Element bezeichnet genau die von der Wissensmenge des zugeordneten Elements ausgeschlossene Wissensmenge, welche bspw. bei der Bildung von Elementen mit Alternativen unter Nutzung der DE MORGAN'schen Formeln oder bei Ausschließungselementen benötigt wird. Es ist günstig, bei der Generierung eines Elements sogleich das zugeordnete NOT-Element zu generieren. Dieses kann günstig über ein Flag, bspw. das LSB des Zeitindex vom zugeordneten Element unterschieden werden.

Die Generierung der Bezüge selbst erfolgt günstig über eine Intervallschachtelung zur Ermittlung des dem Zeitindex in der konkreten assoziativen Datenstruktur zugeordneten Speicherbereiches des Bezugselements und der ein bzw. wechselseitigen Verkettung dieser über Zeiger. Die jedem einzelnen Element optional zugeordneten Rückwärts- bzw. Vorwärtsbezüge selbst werden vorteilhaft wiederum über dynamische Listen verwaltet. Die Bezüge selbst wiederum werden vorteilhaft mit dynamisch gespeicherten Bewertungen versehen, welche wiederum über dynamisch verkettete Listen verwaltet werden. Die Bewertungen sind vorteilhaft nutzerspezifisch, wodurch günstig eine gleichartige und eine statistisch abhängige Mehrfachbewertung vermieden wird. Eine binäre Bewertung ist speichertechnisch günstig über das LSB des eindeutigen Nutzerindex realisierbar. Ein mögliches Bewertungsgewicht kann optional über den Nutzerindex ermittelt und berücksichtigt werden. Über die bei der Eingabe bzw. Bewertung zugeordneten Zeitindizes sind eindeutige und belegbare Zuordnungen des Nutzers zu einem Eintrag gegeben, Manipulationen (zeitliche Häufungen) zur Bewertung selektier- und unterdrückbar (Zeitsperre) sowie über eine, vorteilhaft exponentielle, zeitliche Abklingfunktion der Bewertungen ein evolutionäres Verhalten der assoziativen Datenstruktur realisierbar. Der Koordinatenvektor jedes Elements kann rekursiv über die Vektoraddition aller mit dem jeweiligen Gewicht bewerteten Koordinatenvektoren der Bezugselemente ermittelt werden. Es ist jedoch zur Optimierung von Rechenzeit vorteilhaft, diesen in einem temporären dynamischen Speicherbereich zu verwalten, auf dessen Beginn oder Ende ein Koordinatenzeiger des Elements verweist. Für den vorteilhaft wiederum als dynamisch verkettete Liste aufgebauten Koordinatenvektor ist es wiederum zur Minimierung des benötigten Speicherplatzes vorteilhaft, nur die jeweils notwendigen Koordinaten mit und geordnet nach ihrem Index abzuspeichern. Entsprechend der verwendeten und im neuronalen Netz implementierten Definition für eine Metrik, Norm und Skalarprodukt- es eignen sich bspw. die euklidischen für den n-dimensionalen Raum, wobei jede Neuentwicklung eine neue Dimension eröffnet - können diese für die Analyse und Verwaltung wichtigen Größen rechentechnisch einfach berechnet werden. Es ist günstig, die Norm jedes Elements mit diesem temporär zu speichern.

Beinhaltet ist dieses neuronale Netz zum Wissensmanagement insbesondere in einem zentraler Server, welcher für die Mehrzahl der Nutzer über das Internet kostenfrei oder optional über Einbindung eines sicheren e-Commerce Systems für Informations- und Finanzdienstleitungen kostenpflichtig zur Verfügung steht und entsprechende sachliche Einträge oder Anfragen zu Wissen bedient. Der zur Eingabe dienende chronologische Stream wird bei der Benutzung des neuronalen Netzes durch einen Nutzer vom Dialogsystem generiert, indem dieser bspw. einzutragende Wissensmengen über die Eingabe von bezogenen Entwicklungen definiert, auf Entwicklungen bezogene Anfragen an das neuronale Netz stellt, neue Bezüge angibt oder Bewertungen vornimmt. Da die assoziative Datenstruktur selbst durch den eingegebenen chronologischen Stream stets verändert wird ist es günstig, allen optionalen temporären Datenbereichen der verschiedenartigen Listenelemente den Zeitindex ihrer letzten Berechnung zuzuordnen. Dadurch muß die bei einer Änderung notwendig werdende rekursive Neuberechnung nur über die wirklich veränderten Bereiche der assoziativen Datenstruktur ausgeführt werden, was die benötigten Berechnungsschritte minimiert. Dazu wird der Berechnungszeitindex mit den jeweilig zugeordneten Zeitindizes dieser Datenbereiche verglichen. Es ist vorteilhaft, für einzelne, vom aktuellen Berechnungszeitindex abweichende Berechnungszeitindizes, bspw. für spezielle Berechnungen in der Vergangenheit, die Benutzung der temporären Datenbereiche auszuschließen. also die gesamte assoziative Datenstruktur rekursiv zu berechnen.

Das Verfahren geht von einer Vielzahl von Eintragungen bzw. Bewertungen aus, welche von einer Vielzahl von Nutzern erweiternd und trainierend in die assoziative Datenstruktur des neuronalen Netzes eingetragen werden und diese somit über derartige Eingaben modifizieren. Das neuronale Netz selbst stellt über die implementierten Operatoren die Konvergenz der assoziativen Datenstruktur sicher und führt Verwaltungen und Analysen aus. Im übertragenen Sinn wird durch das neuronale Netz der durch unsachliche Angaben "verrauschte" Eingabestrom von verschiedenen Nutzem statistisch zum wahren Sachverhalt geringer Redundanz verdichtet und letztendlich ein Expertensystem ausgebildet sowie vom neuronale Netz Analysen von Entwicklungen im Hilbertraum der Elemente durchgeführt, die als Punkte betrachtet werden und Koordinaten aufweisen. In einem ersten Schritt wird die Entwicklung durch Bezüge zu einem oder mehreren nächstliegend erscheinenden Bezugssystemen über Wechselwirkungspaare festgelegt und vom neuronalen Netz als Element im Raum der Entwicklungen eingetragen. In einem weiteren Schritt wird durch eine Entscheidung eines weiteren Nutzers über die Zuordnung eines neuen Bezugs oder die Bewertung über die sachliche Richtigkeit des Bezugs der Status dieses Bezugs geändert und damit eine weitere trainierende Eingabe für das neuronale Netz erzeugt. In einem weiteren Schritt, welcher durch eine Vielzahl von Nutzern eine Vielzahl vorstehender Schritte zu jeweils zugeordneten Entwicklungen beinhaltet und demnach eine Vielzahl statistisch unabhängiger Eingabedaten darstellt, werden die Bezüge der assoziativen Datenstruktur vom neuronalen Netz sukzessive angepaßt und das neuronale Netz dynamisiert, welches statistisch zu den idealen Bezügen konvergiert und somit ein Expertensystem ausbildet, welches eine sinkende Redundanz aufweist. In einem weiteren Schrift werden zum Zwecke der Verwaltung und Analyse vom neuronalen Netz Operationen von Mengen im Raum der Entwicklungen durchgeführt oder überwacht, wodurch Definitionsbereiche der Wissensmengen festgelegt und Maße zwischen einzelnen Entwicklungen berechnet werden. Die Maße werden derart definiert, daß sie im jeweiligen Anwendungsfall auf Grund von Gesetzmäßigkeiten der Realität einer statistisch notwendigen Konvergenz zu einem Extremum unterliegen.

Es ist vorteilhaft, den Nutzer bereits während der verbalen Formulierung des Wechselwirkungspaares des Eintrags bzw. der Anfrage mit Recherchenergebnissen aus der Wissensbasis zu gerade eingetragenen Begriffen zu informieren, auf welche der Nutzer anschließend gegebenenfalls Bezug nehmen wird. Dadurch wird die assoziative Datenstruktur stets etwas erweitert und das neuronale Netz trainiert. Letzteres wird günstigerweise über eine implizite positive Bewertung der Wissensmenge einer angegebenen Bezugsentwicklung realisiert, da eine Bezugnahme eine subjektiv positive Bewertung der durch das Wechselwirkungspaar beschriebenen Entwicklung darstellt. Des weiteren sind explizite Bewertungen, vorzugsweise binäre, und die Angabe weiterer Bezüge durch dritte Nutzer möglich und günstig für das Training des neuronalen Netzes. Bei besonderer Berechtigung, bspw. auf Grund einer Qualifikation oder hoheitlicher Berufung als Professor oder Prüfer, kann eine Bewertung mit einem prüferspezifisch höheren Bewertungsgewicht (im weiteren Prüfung) erfolgen. Zur optionalen manuellen Prüfung einer Entwicklung durch einen Nutzer wird vorteilhaft die Gesamtheit der Bezugsentwicklungen daraufhin geprüft, ob nach subjektiver Wertung des Prüfers die Entwicklung in den einzelnen Wissensmengen der Bezugsentwicklungen enthalten ist, also von deren Lehren Gebrauch macht. Die Wirkung der Bewertungen spezieller Länder, Ämter, Prüfer, Nutzer usw. können optional nachträglich über spezielle Filter unterschiedlich umgewichtet werden.

Für Dienstleister günstig sind erweiterte Analysmöglichkeiten und für größere Firmen separate neuronale Netze, die mit dem zentralen neuronalen Netz über eine Kommunikationsverbindung verbunden und optional halbseitig gespiegelt sind. Hoheitliche Strukturen besitzen vorteilhaft neben der Prüfungsberechtigung spezielle, auf das jeweilige Spezialwissensgebiet zur Beschreibung der realen Welt angepaßte, Systeme bspw. für Patentwesen, Makroökonomie, Marketing und Gentechnik. Im weiterbildenden speziellen Anwendungsfall der Genanalyse werden Gensequenzen mit den zugeordneten erkannten Biofunktionen eingelesen, in der Makroökonomie Einzelwirtschaften und zugeordnete Tätigkeitsfelder und in der Marktanalyse Produkte und zugeordnete Kundenbedürfnisse. Das zur Konvergenz dieser hierarchisch auseinander hervorgehenden Entwicklungen entsprechend dem RITZ'schen Verfahren notwendige extremale Funktional als Maß ist als Gesetzmäßigkeit der Realität entsprechend durch die sich aus der Neugier des Menschen über den Erfindergeist ergebende absolute "Erfindungshöhe", durch die sich aus der Triebkraft der Natur im Überlebenskampf ergebende biologische Evolution, durch das sich aus der Gesellschaftsordnung des Menschen ergebende Streben nach finanziellem Reichtum und die sich aus der Trägheit des Menschen ergebenden Lebensansprüche gegeben.

Der zur Eingabe dienende Stream kann zur Eingabe eines Nutzers über ein Dialogsystem alternativ oder vorteilhaft ergänzend auch im Preprozessing aus Inhaltsdatenbanken generiert werden, in welchen Wissen von bezogenen Entwicklungen verborgen beinhaltet ist und welche durch ihre weitgehend einheitliche Strukturierung und spezifische Formulierung dieses Wissen mit einer hinreichenden Signifikanz über eine computergestützte automatische Projektion aus ihrem Kontext in das Format des Streams zu konvertieren ermöglichen. Als besonders geeignet sollten sich Patentdokumentationen im Textformat erweisen, wobei dem angegebenen Stand der Technik, der Aufgabe und dem Wesen der Erfindung bzw. dem kennzeichnenden Teil der Schutzansprüche mit ihren typischen Formulierungen, sowie deren anzahlmäßige Zuordnung zu insbesondere niedrigen Bezugsnummern eine besondere Bedeutung zukommt. Es ist vorteilhaft, bereits beim Preprozessing die gewöhnlichen Recherchenmöglichkeiten und den Thesaurus über der Wissensbasis des neuronalen Netzes zu benutzen, um die entsprechend signifikanten Textstellen herauszufiltern. Diese sollten bezüglich ihrer Begriffe stets ein hohes Konkretisierungsniveau aufweisen. Ebenso ist es günstig, derartiges Wissen mit einem Verweis auf den zugrunde liegenden Inhalt einer Inhaltsdatenbank, bspw. die Patentnummer, zu versehen sowie den zuerkannten Zeitrang zu vermerken, was insbesondere bei Analysen im Patentwesen nützlich ist. Eine weitere Quelle zur automatischen Generierung von Streams sollten die Patentklassifikation und Fachlexika darstellen.

Zur Verwendung im Patentwesen, bei welchem Wissen bzw. Entwicklungen verwaltet werden, die in Patenten, Gebrauchsmustern oder techn. Druckschriften offengelegt sind oder optional Schutzrechte darstellen, nimmt das neuronale Netz zumindest unterstützend eine computergestützte Prüfung, amtliche Verwaltung, Überwachung, Pflege, Recherche oder Aufarbeitung des Weltwissens in einem Klassifizierungssystem vor und ist als sachliches Expertensystem üblichen tabellarischen Datenbanken zum Patentwesen übergeordnet und vorteilhaft mit diesen verknüpft. Dazu werden durch den Erfinder als Nutzer zur Definition seiner als Wechselwirkungspaar definierten Entwicklung Bezüge angegeben und in der assoziativen Datenstruktur computergestützt verwaltet, denen Teilaufgaben zugeordnet sind, welche der Erfinder endgültig oder nachträglich aus dem Pool der ursprünglichen Kurzbeschreibung festlegt, die über ein Wechselwirkungspaar ein Bezugssystem bestimmen und rückwärtig zur Definition von weiteren Bezugssystemen verwendet werden, wobei sich der Schutzbereich des Entwicklungssystems aus der Durchschnittsmenge aller Bezugssysteme bestimmt. Dabei wird automatisch vom neuronalen Netz über Funktionale des Hilbertraumes und der Zeitindizes eine "Erfindungshöhe" und eine "Neuheit" zwischen einzelnen oder allen eingetragenen Entwicklungen berechnet und dazu der Status jedes einzelnen Bezugs berücksichtigt. Durch Angaben Dritter oder amtlicher Prüfung als zusätzliche Eingabe für das neuronale Netz wird die assoziative Datenstruktur inkrementell erweitert oder modifiziert, wobei die Entwicklung des aktuellen Wissensstandes bei der sachlichen Prüfung mit der Zeit zur Redundanzsenkung führt.

Besonders Für Anwendungen im Patentwesen ist es vorteilhaft, zur Problematik der Geheimhaltung eine entsprechende Verschlüsselung, Identifizierung des Berechtigten und Authentifizierung der Eingaben über implementierte kryptologische Verfahren sicherzustellen. Mit dem beim Eintrag angelegten eindeutigen Zeitindex und einem eindeutigen Nutzerindex kann vorteilhaft mit diesen beiden Indizes die Authentizität der Definition und der Bezüge gewährleistet und diese optional verschlüsselt werden. Eine Offenlegungsschonfrist könnte über einen entsprechenden Zeitfilter bei der Ausgabe gewährleistet werden. Das Wissen eines Schutzrechts bzw. eines Anspruchs könnte als Kopie mit unveränderbaren abschließenden Bezügen mit einem besonderen Flag gekennzeichnet werden. Eine Unterteilung der Elemente in Dokumente und Urkunden ist vorteilhaft, wobei die Urkunden zu einem bestimmten Zeitpunkt als Kopie aus einzelnen Dokumenten hervorgehen und die Bezüge der Urkunden einen zeitweise konstanten Status und optional die Datenbanken der Urkunden eine Verknüpfung mit Registern und/oder einen eindeutigen Verweis auf Inhaltsdatenbanken aufweisen, wobei optional Urkunden, die sich über Bezüge auf andere Entwicklungssysteme beziehen, abhängige Urkunden gleichen Zeitrangs der Urkunden darstellen. Urkunden nehmen demnach nur indirekt über die Dynamik ihrer Bezugsdokumente an der Dynamik der assoziativen Datenstruktur teil, bezüglich ihrer Bezüge sind sie eingefroren, wodurch unter Ausschluß einer rückwärtigen Betrachtungsweise die aktuell konkretisierte assoziative Datenstruktur benutzt werden kann. Bezüglich eines derartigen Schutzrechtswissens ist zu einem gegebenen Zeitindex gegenüber der assoziativen Datenstruktur optional eine rechentechnisch definierte sachliche "Neuheit" bezüglich des resultierenden logischen Terms der definierenden Begriffe der Gesamtheit der signifikanten Bezüge sowie eine rechentechnisch definierte sachliche "Erfindungshöhe" über Funktionale wie dem Skalarprodukt berechenbar, bspw. als orthogonaler Abstand vom Trend aller nächstliegenden Entwicklungen, ohne eine abschließende Aussage über diese Rechtsbegriffe zu treffen. Für Schutzrechtswissen wäre des weiteren ein Verweis auf das zugeordnete Schutzrecht oder das amtliche Register mit dem Rechtsstand sinnvoll.

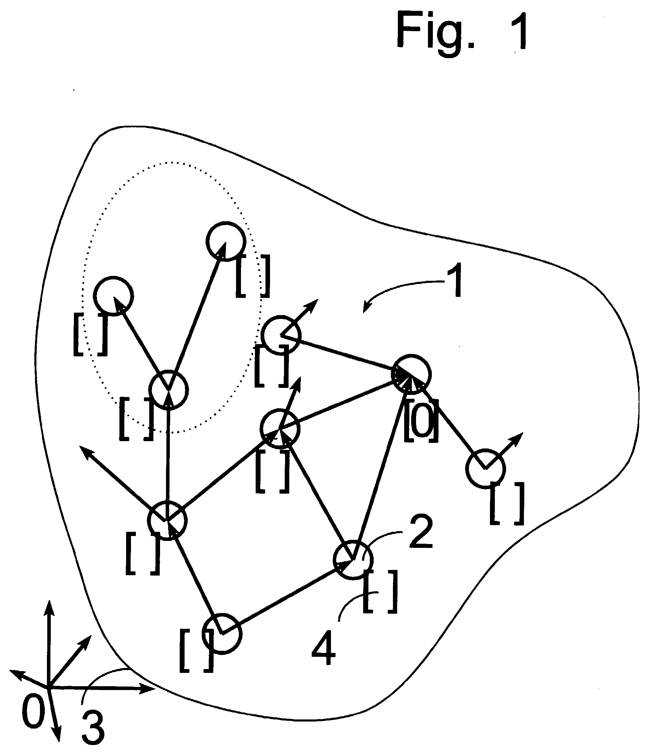

Die folgenden Figuren 1-6 versuchen, die Erfindung zu verdeutlichen, ohne daß diese dadurch beschränkt wird oder auf alle in der Beschreibung angegebenen wesentlichen Merkmale Bezug genommen werden kann und soll.

Nach Fig. 1 besteht ein neuronales Netz 1 zum computergestützten Wissensmanagement aus (üblicherweise als Neuronen bzw. Knoten bezeichneten) aufeinander bezogenen und gewichteten Elementen 2, welche durch ihre speziellen Eigenschaften einen Hilbertraum 3 ausbilden und denen vorzugsweise ein Koordinatenvektor 4 zugeordnet ist, welcher beim Wurzelelement vorteilhaft [0] gewählt wird.

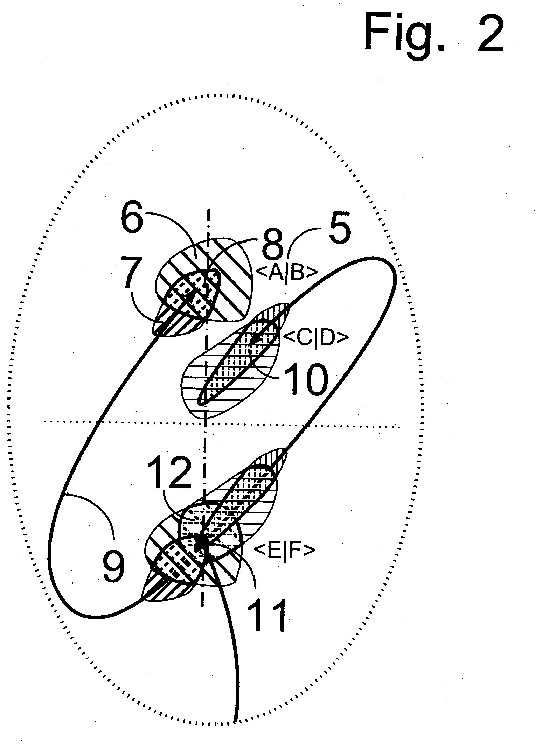

Nach Fig. 2 ist jedem einzelnen Element 2 der entsprechenden Einzelheit in Fig. 1 ein Bedeutungsinhalt zugeordnet, welcher als spezielle Form der Definition der Entwicklung als Wechselwirkungspaar 5 ausgebildet ist, und vorzugsweise eine Quantität 6 und eine Qualität 7 beschreibt, und damit über deren Durchschnittsmenge genau die Wissensmenge 8 definiert, welche die Quantität 6 auf die Qualität 7 und die Qualität 7 auf die Quantität 6 abbildet. Über gerichtete Bezüge 9 auf bereits eingetragene Bezugsentwicklungen werden diese dort definierten Wissensmengen 8, 10 miteinander verknüpft und begrenzen somit die beschriebene Wissensmenge 11 der sich darauf beziehenden Entwicklung. Eine Konkretisierung der Wissensmengen 8, 10 der Bezugsentwicklungen führt dadurch auch zu einer Konkretisierung der anfänglich nur durch die Bezugsgattung 12 begrenzten Wissensmenge 11 der sich darauf beziehenden Entwicklung selbst.

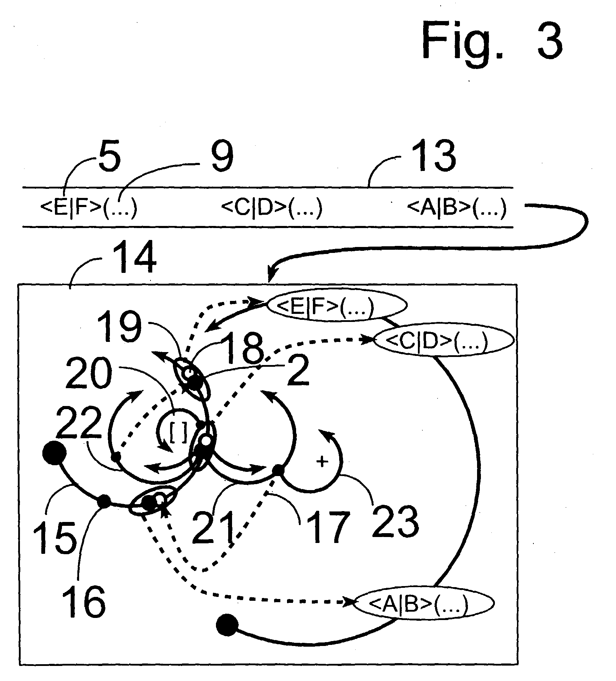

Nach Fig. 3 dient der zur Eingabe benutzte Stream 13 in Form eines Datenstroms, welcher streng chronologisch die Definition in Form eines Wechselwirkungspaares 5 und die Bezüge 9 auf bereits eingetragene Elemente 2 beinhaltet, zur inkrementellen Erweiterung des neuronalen Netzes, indem in die im linearen Speicherbereich 14 des Computers dynamisch über verkettete Listen 15 verwalteten assoziativen Datenstruktur neue Strukturelemente 16 eingefügt und über computerspezifische Zeiger 17 verknüpft werden. Vorteilhaft bilden ein Element 2 und ein NOT-Element 18 ein Paar 19, welches auf das Wechselwirkungspaar 5 zeigt und vorteilhaft eine Koordinatenliste 20 beinhaltet, welche die Koordinaten des Elements 2 beinhaltet, die invertiert den Koordinaten des NOT-Elements entsprechen. Jedem Element 2 und jedem NOT-Element 18 ist vorteilhaft eine Rückbezugsliste 21 und eine Vorwärzbezugsliste 22 zugeordnet, wobei den Bezugslisten 21, 22 vorteilhaft Bewertungslisten 23 zugeordnet sind.

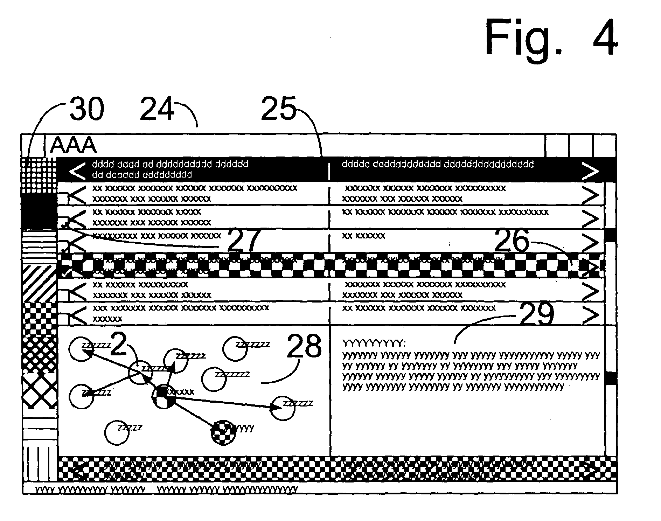

Nach Fig. 4 ermöglicht ein Dialogsystem über eine intuitive Oberfläche 24 die Eingabe von bzw. die Anfrage zu Entwicklungen über die Definition 25 des verbalen Wechselwirkungspaares und die Angabe von Bezügen. Dabei wird vorteilhaft quasisimultan vom neuronalen Netz eine Auswahl 26 von Elementen 2 bereits in der Wissensbasis erfaßter Entwicklungen mit in den Definitionen 25 enthaltenen ähnlichen Begriffen angeboten, aus welcher einzelne Bezüge zu verwendeten Begriffen über einen Schalter 27 getätigt werden können. Innerhalb der angebotenen Auswahl 26 von Entwicklungen kann jeweils eine markiert werden, zu welcher die lokale Umgebung 28 der direkt verbundenen oder der naheliegenden Elemente 2 der assoziativen Datenstruktur angezeigt wird, vorteilhaft graphisch unter Darstellung des Abstands zwischen einzelnen Entwicklungen und deren Kurztiteln. In der lokalen Umgebung 28 kann über eine Untermarkierung zwischen den einzelnen Entwicklungen gewandert werden, wobei die Definition 25 und Kurzbeschreibung 29 dieser angezeigt wird. Nach vollständiger Definition 25 wird das Wechselwirkungspaar und die Bezüge signiert und über den Stream in die assoziative Datenstruktur des neuronalen Netzes integriert. In weiteren Tools 30 ermöglicht das Dialogsystem in ähnlicher oder üblicher Weise intuitiv die Eingabe oder Ausgabe eines Logins, eines Filters, einer textbasierten Suche, eine rekursive Eingabe von allgemeineren Entwicklungen zur Vorabdefinition von Begriffen, die Eingabe von zusätzlichen Bezügen und von Bewertungen, die Ausgabe der Strukturdaten der eingetragenen, direkt bezogenen Entwicklungen, insbesondere Koordinatenangaben des Elements zur Merkmalsanalyse der Entwicklung, Angabe deren zugeordnete Maße, bspw. mit Hilfe von Skalarprodukten berechnete "Erfindungshöhe" zu nächstliegenden (Kugel) oder nächstähnlichen (Raumwinkel) eingetragenen Entwicklungen, mit Hilfe der Norm ermittelter "Konkretisierungsgrad" und mit Hilfe der Zeitindizes von gleichen Termen aus Begriffen gleicher Bedeutung berechneter "Zeitrang" dieser. Bei den Analysen werden optional mehrere Entwicklungen (geeignet ausgewählt, gefiltert) berücksichtigt, wobei auch eine Analyse für einem zurückliegenden Zeitpunkt möglich ist, bei welcher alle Elemente jüngeren Zeitindizes unberücksichtigt bleiben und sich demzufolge die assoziative Datenstruktur in einer zurückliegenden Struktur darstellt.

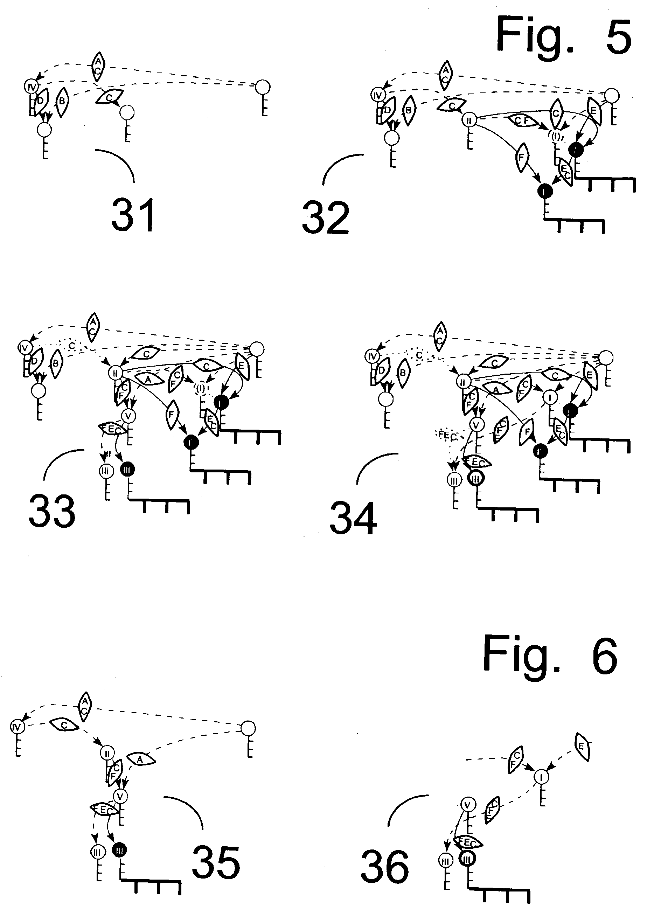

Nach Fig. 5 wird die dynamische Umstrukturierung beschrieben. Die assoziative Datenstruktur besteht aus Elementen (hier Dokumente und Urkunden), welche von älteren Dokumenten ausgehend über Bezüge von Merkmalen A, B, ... strukturiert und zur Initialisierung T0 (31) signifikant bewertet sind.
Zu T1 (32) wird zur Eintragung einer Urkunde I ein dazu notwendiger endgültigen Bezug C auf Dokument II und das zugeordnete nichtoffengelegte Dokument (I) eingetragen. Die Urkunde I' stellt eine abhängige Urkunde I' zur Urkunde I dar.
Zu T2 (33) ist bspw. nach der Prüfung einer später angemeldeten Urkunde III, bezüglich des Dokuments II für ein äquivalentes Merkmal C ein älterer Bezug C als der des Bezugsdokuments IV signifikant, was eine Abwertung des alten Bezugs C und eine geänderte assoziative Datenstruktur ergibt.
Zu T3 (34) wird nach der Offenlegung des Dokument I erkennbar, daß alle Merkmale C;E;F vom Dokument III bereits vollständig durch das Dokument I vorweggenommen sind, und von einem Nutzer bspw. einem Prüfer, wird ein neuer signifikanter Bezug C, E, F zum Dokument I eingetragen. Somit wird die Urkunde III mit jüngeren endgültigen Bezug C, E, F zu Dokument V wegen fehlender Neuheit löschungsreif.

Fig. 6 beschreibt speziell Analysen im Patentwesen: Zur Ermittlung der "Erfindungshöhe" der Urkunde III werden zum Prioritätszeitpunkt (35) die Äste der einzelnen Merkmale rekursiv über ihre als Bezugselemente dienenden offengelegten Dokumente II, IV, V bewertet, wodurch über die sich damit ergebenden Koordinaten eine Berechnung möglich ist. Zur Ermittlung der "Neuheit" der Urkunde III wird zum aktuellen Zeitpunkt (36) in der assoziativen Datenstruktur bezüglich des zugeordneten Dokuments III der Zeitrang der Gesamtheit aller Merkmale der fixierten Bezüge C, E, F untersucht.

### Bezugszeichen:

- 1: neuronales Netz
- 2: Elemente
- 3: Hilbertraum
- 4: Koordinatenvektor
- 5: Wechselwirkungspaar
- 6: Quantität
- 7: Qualität
- 8: Wissensmenge einer Bezugsentwicklung
- 9: Bezug
- 10: Wissensmenge einer weiteren Bezugsentwicklung
- 11: Wissensmenge der Entwicklung
- 12: Bezugsgattung
- 13: Stream
- 14: Speicherbereich
- 15: verkettete Liste
- 16: Strukturelement
- 17: computerspezifische Zeiger
- 18: NOT-Element
- 19: Paar
- 20: Koordinatenliste
- 21: Rückbezugsliste
- 22: Vorwärzbezugsliste
- 23: Bewertungsliste
- 24: intuitive Oberfläche
- 25: Definition
- 26: Auswahl
- 27: Schalter
- 28: Umgebung
- 29: Kurzbeschreibung
- 30: Tool
- 31: Zeitpunkt T0
- 32: Zeitpunkt T1
- 33: Zeitpunkt T2
- 34: Zeitpunkt T3
- 35: Prioritätszeitpunkt
- 36: aktueller Zeitpunkt

## Patentansprüche

**1.** Neuronales Netz zum computergestützten Wissensmanagement, wobei das neuronale Netz (1) aus aufeinander bezogenen und gewichteten Elementen (2) besteht, welches rechentechnisch als assoziative Datenstruktur dynamisch im linearen Speicherbereich (14) eines Computers angelegt ist, und den einzelnen Elementen (2) ein Bedeutungsinhalt zugeordnet ist, dadurch gekennzeichnet,
- daß jedem Element (2) als Bedeutungsinhalt eine Definition (25) einer Entwicklung zugeordnet oder diese direkt beinhaltet ist,
- daß diese Definition (25) eine Durchschnittsmenge in Form eines Wechselwirkungspaares (5) ausbildet, welches optional in der Form 〈 Quantität (6) | Qualität (7) 〉 über seine verbale Definition (25) die Entwicklung und damit genau die Wissensmenge (11) definiert, welche die Quantität (6) auf die Qualität (7) und die Qualität (7) auf die Quantität (6) abbildet und
- daß die Elemente (2) einen Hilbertraum (3) ausbilden.

**2.** Neuronales Netz zum computergestützten Wissensmanagement nach einem der vorhergehenden Ansprüche, dadurch gekennzeichnet,
- daß ein Operator zur Berechnung eines Skalarprodukts zwischen je zwei Elementen (2) implementiert ist, welcher optional die Form des enklidischen für den n-dimensionalen Raum aufweist,
- daß vom neuronalen Netzes (1) zu jedem Element (2) ein zugeordnetes NOT-Element (18) mit negativem Gewicht des Elements (2) generierbar ist, welches genau die von der Wissensmenge (11) des zugeordneten Elements (2) ausgeschlossene Wissensmenge bezeichnet, und optional mit dein Element (2) als Paar (19) generiert ist,
- daß im neuronalen Netz (1) ein Neueintrag eines Elements (2) als eine Addition und eine Bewertung eines Bezugs (9) als eine Multiplikation im Hilbertraum (3) implementiert ist und
- daß vom neuronalen Netz (1) für jedes Element (2) ein Maß berechenbar und optional mit diesem gespeichert ist.

**3.** Neuronales Netz zum computergestützten Wissensmanagement nach einem der vorhergehenden Ansprüche, dadurch gekennzeichnet,
- daß dem Element (2) genau ein Koordinatenvektor (4) zugeordnet ist oder diesen direkt beinhaltet, welcher optional über Rekursionen im neuronalen Netz (1) berechnet wird,
- daß optional der Koordinatenvektor (4) als dynamisch verkettete Liste (15) ausgebildet ist und optional nur die notwendigen Koordinaten mit und nach ihrem Zeitindex geordnet beinhaltet,
- daß optional jedes Element (2) beim Eintrag einen eindeutigen Zeitindex und einen eindeutigen Nutzerindex beinhaltet,
- daß optional eine Verschlüsselung, Identifizierung des berechtigten Nutzers und Authentifizierung der Eingaben über implementierte kryptologische Verfahren sichergestellt ist, wobei optional mit Hilfe des Zeitindex und des Nutzerindex die Authentizität der Definition und der Bezüge (9) gewährleistet und diese optional verschlüsselt sind,
- daß optional über einen temporären Datenbereich der verschiedenartigen Listenelemente der Berechnungszeitindex ihrer letzten Berechnung zugeordnet ist, wobei dieser Berechnungszeitindex optional vor Ausführung der Berechnung mit dem aktuellen Berechnungszeitindex verglichen wird und
- daß optional jedes Element (2) einen Verweis auf den zugeordneten Eintrag einer Inhaltsdatenbank aufweist, welcher als Grundlage zur Generierung des Wissens diente.

**5.** Neuronales Netz zum computergestützten Wissensmanagement nach einem der vorhergehenden Ansprüche, dadurch gekennzeichnet,
- daß das neuronale Netz (1) Bestandteil eines Servers ist,
- daß es optional über das Internet und optional über Einbindung eines sicheren e-Commerce Systems über ein Dialogsystem mit einem Nutzer verbunden ist,
- daß optional die Eingabe für das neuronale Netz (1) über einen chronologischen Stream (13) erfolgt,
- daß optional separate dezentrale neuronale Netze (1') mit dem zentralen neuronalen Netz (1) über eine Kommunikationsverbindung verbunden und optional halbseitig gespiegelt sind und
- daß optional das Dialogsystem eine intuitive Oberfläche (24) aufweist, welche als Eingabe für das neuronale Netz (1) eine Definition (25) des Wechselwirkungspaares (5), aus einer Auswahl (26) über Schalter (27) selektierte Bezüge (9) und optional einen Kurztitel und eine Kurzbeschreibung (29) sowie als Ausgabe die graphische Anzeige einer lokalen Umgebung (28) von direkt verbundenen und/oder unverbundenen Elementen (2) in der assoziativen Datenstruktur gestattet sowie weitere Tools (30) aufweist.

**6.** Neuronales Netz zum computergestützten Wissensmanagement nach einem der vorhergehenden Ansprüche, dadurch gekennzeichnet,
- daß dem neuronalen Netz (1) speziell angepaßte Systeme für Anwendungen im Patentwesen, Makroökonomie, Marktanalyse oder Genanalyse zugeordnet sind,
- daß speziell für eine Anwendung im Patentwesen optional über einen entsprechenden Zeitfilter bei der Ausgabe eine Offenlegungsschonfrist realisiert ist, optional das Wissen eines Schutzrechts als Kopie mit unveränderbaren abschließenden Bezügen (9), Definitionen (25) und mit einem besonderen Flag gekennzeichnet ist, optional bezüglich eines derartigen Schutzrechtswissens zu einem gegebenen Zeitindex gegenüber der assoziativen Datenstruktur eine rechentechnisch definierte sachliche Neuheit bezüglich der Gesamtheit der signifikanten Bezüge (9) sowie eine rechentechnisch definierte sachliche Erfindungshöhe über Maße berechenbar ist, und optional ein Verweis auf das zugeordnete amtliche Register mit dem Rechtsstand beinhaltet ist.

**7.** Verfahren für ein neuronales Netz zum computergestützten Wissensmanagement, dadurch gekennzeichnet, daß
- in einem Schritt eine erweiternde Eingabe an das neuronale Netz (1) erfolgt, welche optional zuvor in einen Stream (13) konvertiert wurde,
- in einem weiteren Schritt durch Zugriff auf einen linearen Speicherbereich (14) des Computers, die Verwendung und Arithmetik von computerspezifischen Zeigern (17) auf Teile dieses Speicherbereichs (14) und einen für Rekursionen über die gesamte assoziative Datenstruktur ausreichend großen Stack eine Verknüpfung und inkrementelle Erweiterung der assoziativen Datenstruktur des neuronalen Netzes (1) um diese Eingabe erfolgt,
- in einem weiteren Schritt das Gewicht der Elemente (2) aktualisiert bzw. berechnet wird, wobei der Neueintrag eines Elements (2) einer Addition und die Bewertung eines Bezugs (9) einer Multiplikation unter Verwendung der implementierten Operatoren zur Berechnung der Metrik, Norm und Skalarprodukt im Hilbertraum entspricht, welche vorzugsweise als euklidische für den n-dimensionalen Raum ausgebildet sind,
- in einer optionalen Vielzahl der vorhergehenden Schritte statistisch eine Konvergenz der assoziativen Datenstruktur des neuronalen Netzes (1) zu geringer Redundanz erfolgt,
- in einem weiteren Schritt unter Verwendung der Operatoren zur Berechnung der Metrik, Norm und Skalarprodukt im Hilbertraum über die Berechnung von Maßen vom neuronalen Netz (1) eine Verwaltung von und/oder Analyse zwischen einzelnen Elementen (2) vorgenommen wird,
- in einem letzten Schritt die Ergebnisse der Verwaltung oder Analyse ausgegeben werden.

**8.** Verfahren für ein neuronales Netz zum computergestützten Wissensmanagement nach einem der vorhergehenden Verfahrensansprüche, dadurch gekennzeichnet,
- daß alle Elemente (2) dynamisch gespeichert und über eine über Zeiger (17) verkettete Liste (15) dynamisch verwaltet werden,
- daß jedes Element (2) ein eindeutig zugeordnetes NOT-Element (18) besitzt, welches optional einen Zeiger (17) auf dasselbe Wechselwirkungspaar (5) aufweist und optional mit der Generierung des Elements (2) generiert wird, wobei sich optional das NOT-Element (18) im LSB des Zeitindex vom zugeordneten Element (2) unterscheidet,
- daß optional die Generierung der Bezüge (9) selbst über eine Intervallschachtelung zur Ermittlung des dem Zeitindex in der konkreten assoziativen Datenstruktur zugeordneten Speicherbereiches (14) des Bezugselements erfolgt und
- daß diese optional über Zeiger (17) ein- oder wechselseitig verkettet werden, wobei diese optional über dynamische Bezugslisten (21, 22) verwaltet werden,
- daß die Bezüge (9) selbst optional mit dynamisch gespeicherten, optional nutzerspezifischen, Bewertungen versehen werden, welche optional über das LSB des eindeutigen Nutzerindex ausgebildet sind und welche optional über dynamisch verkettete Bewertungslisten (23) verwaltet werden,
- daß die Operatoren zur Berechnung der Metrik, Norm und Skalarprodukt im Hilbertraum vom neuronalen Netz (1) auf rekursiv ermittelte Koordinaten und/oder auf Koordinatenvektoren (4) der Elemente (2) angewandt werden und optional die Analysen auf Methoden der Vektorrechnung beruhen und
- daß optional vom neuronalen Netz (1) aus den am meisten signifikanten Bezügen (9) der assoziativen Datenstruktur und den zugeordneten Elementen (2) ein Klassifizierungssystem generiert wird.

**9.** Verfahren für ein neuronales Netz zum computergestützten Wissensmanagement nach einem der vorhergehenden Verfahrensansprüche, dadurch gekennzeichnet,
- daß über die intuitive Oberfläche (24) bereits während der Eingabe der Definition (25) des Wechselwirkungspaares (5) vom neuronalen Netz (1) eine Auswahl (26) von Elementen (2) ausgegeben wird, welche ähnliche Begriffe wie in der Definition (25) beinhalten, wobei optional ein durch den Nutzer geschalteter Bezug (9) auf ein Element (2) vom neuronalen Netz (1) als trainierende Eingabe benutzt wird,
- daß optional neue, die beschriebene Wissensmenge (11) definierende Quantitäten (6) bzw. Qualitäten (7) auf der Basis der durch angegebene Bezüge (9) vorbekannten Quantitäten (6) bzw. Qualitäten (7) durch den Nutzer begrifflich festgelegt werden, wobei optional Operatoren AND, OR, NOT verwendet werden, diese optional vom neuronalen Netz (1) über eine Analyse der Syntax und Semantik in mathematisch logische Terme von Begriffen transformiert und rekursiv über die Bezugselemente rechentechnisch aufgelöst werden, wobei optional daraus vom neuronalen Netz (1) je einen Thesaurus für Quantitäten (6) bzw. Qualitäten (7) generiert wird, welcher diese Begriffe hierarchisch strukturiert und entsprechend des Gewichts der sie verwendenden Elemente (2) bewertet beinhaltet,
- daß optional jedem Element (2) durch den Nutzer eine konkrete in der beschriebenen Wissensmenge (11) beinhaltete Entwicklung als Kurzbeschreibung (29) und ein Kurztitel beigefügt wird, wobei optional in den Kurzbeschreibungen (29) und Definitionen (25) in üblicher Weise textorientiert und/oder über linguistisch sinnvolle Verknüpfungen im Kontext nach Begriffen recherchiert werden kann, wobei optional dazu vom neuronalen Netz (1) je eine rechts- und linkgeordnete indizierte Liste der Begriffe mit Verweis auf den Zeitindex des diesen beinhaltenden Elements (2) oder ein Zeiger (17) auf diesen generiert wird und
- daß optional der zur Eingabe dienende Stream (13) im Preprozessing automatisch aus textbasierten Inhalten von Inhaltsdatenbanken generiert wird, indem eine computergestützte automatische verdichtende Projektion aus dem Kontext des Inhalts in das Format des Streams (13) erfolgt, wobei optional beim Preprozessing automatisch die Recherchenmöglichkeiten und der Thesaurus über der Wissensbasis des neuronalen Netzes (1) verwendet werden.

**10.** Verwendung des neuronalen Netzes zum computergestützten Wissensmanagement nach einem der vorstehenden Ansprüche, dadurch gekennzeichnet,
- daß es im Patentwesen als Expertensystem für sachliche Entscheidungen, zur Verwaltung oder für Analysen dient, wobei das Wechselwirkungspaar (5) zwischen Lösungen und Aufgaben bzw. Mittel und Wirkungen im technischen Gebiet ausgebildet ist,
- daß es in der Makroökonomie als Expertensystem für wirtschaftliche Entscheidungen, zur Verwaltung oder für Analysen dient, wobei das Wechselwirkungspaar (5) zwischen wirtschaftlich trennbaren Einzelwirtschaften und Tätigkeitsfeldern ausgebildet ist,
- daß es im Marketing als Expertensystem für Vertriebsentscheidungen, zur Verwaltung oder für Analysen dient, wobei das Wechselwirkungspaar (5) zwischen Produkten und Kundenbedürfnissen ausgebildet ist, oder
- daß es in der Gentechnik als Expertensystem für die DNS-Sequenzierung, zur Verwaltung oder für Analysen dient, wobei das Wechselwirkungspaar (5) zwischen Gensequenzen und Biofunktionen ausgebildet ist.
